# EUROPEAN PATENT SPECIFICATION

(11) **EP 2 451 216 B1**
(45) Date of publication and mention of the grant of the patent: **10.06.2015**
(21) Application number: 11773165.3
(22) Date of filing: 09.03.2011
(51) Int. Cl.: H04W 40/12, H04B 7/15, H04W 48/20, H04W 40/08

(54) **WIRELESS DEVICE**
DRAHTLOSE VORRICHTUNG
DISPOSITIF SANS FIL

(30) Priority: 09.09.2010 JP 2010201648
(43) Date of publication of application: 09.05.2012
(73) Proprietor: Panasonic Intellectual Property Management Co., Ltd., Osaka 540-6207 (JP)
(72) Inventor: WATANABE, Takashi, Chuo-ku, Osaka-shi Osaka 540-6207 (JP); YAMAMOTO, Masahiro, Chuo-ku, Osaka-shi Osaka 540-6207 (JP); HORIIKE, Yoshio, Chuo-ku, Osaka-shi Osaka 540-6207 (JP); KOBA, Yasuo, Chuo-ku, Osaka-shi Osaka 540-6207 (JP)
(74) Representative: Schwabe - Sandmair - Marx
(86) International application number: PCT/JP2011/001388
(87) International publication number: WO 2012/032683

(56) References cited:
- EP-A1- 1 626 537
- WO-A1-95/18498
- JP-A- 2002 325 273
- JP-A- 2003 030 772
- JP-A- 2006 081 164
- US-A1- 2008 056 196

## Description

### Technical Field

The present invention relates to a method for searching a communication route when a radio (wireless) device performs radio communication.

### Background Art

Conventionally, in this kind of radio device, a server positioned in an uppermost order in a system supervises communication routes collectively (see e.g., Patent Literature 1). Or, a route having a great difference in electric field intensity level between a communicating terminal and its adjacent terminal is searched and a communication route is constructed (see e.g., Patent Literature 2).

However, in the above stated conventional methods, the route cannot be determined (decided) unless all of the radio terminals constituting the system are installed, or there is a need for an electric field intensity determination means having a wide dynamic range which allows identification as to a difference in electric field intensity between terminals. Because of this, it is not easy to construct the system, for example, communication robustness cannot be easily checked in installation of the terminals. In these methods, since the route is set and searched on the basis of a certain determination criterion which is a signal level between the radio terminals, it is difficult to ensure a robust communication quality particularly in a case where the radio terminals are fixed. If a radio device to be connected is searched based on a determination criterion in all cases, it is necessary to set a route which makes a communication distance significantly short, under an influence of a surrounding environment or fading. Besides, there is a need for many relay terminals, which causes problems associated with an introduction cost, a maintenance cost of the system, etc..

Patent Literature 3 relates to a Radio device having fewer route disconnections and switchings and radio communication network including such devices. The route maintenance unit outputs a period setting request to the period setting unit when the communication unit normally receives a Hello packet for the first time. The period setting unit sets a link connection confirmation period in response to the period setting request and outputs the set period to the route maintenance unit. The route maintenance unit maintains a radio link between the radio device in which the route maintenance unit is provided and an adjacent device upon receiving a data packet other than a Hello packet from the adjacent radio device even if a Hello packet is not received in the link connection confirmation period. Consequently, route disconnection or switching occurs less often.

Patent Literature 4 defines a routing method which allows to determine best paths from link weights in situations where these weights are not additive, but the characteristic of a concatenated path is determined mainly by single "bottleneck" links. To be compatible, the metric must be chosen from a specific set of metrics, called bottleneck metrics in this description. The new widest-path method has some characteristics in common with the known Dijkstra method for additive weights. Implementations in communication networks are disclosed which lead to new nodes, new networks and new network protocols. The widest-path method, however, can solve many other routing problems not necessarily related to electronic communication.

Patent Literature 5 relates to a method for expanding an area for a LAN system and wireless LAN and access points and stations thereof. In this respect, a method for expanding an area of a wireless LAN in which a service area can be expanded through a simple procedure, and a LAN system is described. Each access point determines an insertion status of a wired LAN cable and acts as the master access point of a cable is inserted, or as the slave access point of no cable is connected. Of the two access points receiving a "connection instruction", the master access point or a higher access point connected directly or indirectly to the master access point and a lower access point not connected to the master access point are added their lower access point as a new service area through a procedure comprising sending a "connection device message" from the higher level, sending a "connection request message" from the lower level and then sending a "connection response message" from the higher level.

### Citation Lists

### Patent Literature

Patent Literature 1: Japanese Laid-Open Patent Application Publication No. 2007-335994
Patent Literature 2: Japanese Laid-Open Patent Application Publication No. Hei. 11-168526
Patent Literature 3: US-2008/056196 A1
Patent Literature 4: WO 95/18498 A1
Patent Literature 5: JP 2006-081164 A

### SUMMARY OF THE INVENTION

The invention is defined by the subject-matter of independent claim 1. Dependent claim 2 is directed to an advantageous embodiment.

### ADVANTAGES OF THE INVENTION

Advantageously, a radio device introduces a communication protocol used for searching a communication route only between this radio device and a terminal which is upper in one order and is a connected target, and determines (decides) the route based on a signal level (electric field intensity) between radio terminals in search of the route in such a manner that a determination criterion used for connecting this radio device to the upper terminal is changed according to the signal level received in this radio device.

For example, in a case where a radio device searches an upper terminal to be connected to this radio device, if it is confirmed that plural upper terminals are in a good condition for communication with this radio device, the upper terminal to be connected to this radio device is determined (decided) in view of a communication condition, the number of relay stages of the upper terminal, or the number of lower terminals already connected to the upper terminal. On the other hand, if it is not confirmed that there does not exist an upper terminal in a good condition for communication with this radio device, an upper terminal which is highest in the signal level between the radio terminals is selected.

Advantageously, the radio device searches a communication route between radio devices in view of installation information of radio terminals. Therefore, a robust communication route can be ensured in a fixed radio device, and a distance between the radio terminals can be made as long as possible. Moreover, the number of relay terminals can be reduced efficiently, which leads to reduction of an introduction cost and a maintenance cost.

### Brief Description of the Drawings

[Fig. 1] Fig. 1 is a block diagram showing an internal configuration of terminals according to Embodiment 1 of the present invention.
[Fig. 2] Fig. 2 is a view showing time slots according to Embodiment 1 of the present invention.
[Fig. 3] Fig. 3 is a view showing a detailed content of the time slots according to Embodiment 1 of the present invention.
[Fig. 4] Fig. 4 is a view showing a compatibility in time slot between a concentrator and a meter interface according to Embodiment 1 of the present invention.
[Fig. 5] Fig. 5 is a view showing a telegram format according to Embodiment 1 of the present invention.
[Fig. 6] Fig. 6 is a view of a system according to Embodiment 1 of the present invention.
[Fig. 7] Fig. 7 is a view showing a sequence according to which the meter interface searches the concentrator according to Embodiment 1 of the present invention.
[Fig. 8] Fig. 8 is a view showing a search condition threshold according to Embodiment 1 of the present invention.
[Fig. 9] Fig. 9 is a view showing exemplary concentration search processing according to Embodiment 1 of the present invention.
[Fig. 10] Fig. 10 is a block diagram showing an internal configuration of a repeater according to Embodiment 2 of the present invention.
[Fig. 11] Fig. 11 is a view showing a calculation method of repeater installation information according to Embodiment 2 of the present invention.
[Fig. 12] Fig. 12 is a view showing a sequence according to which the meter interface searches a repeater, according to Embodiment 2 of the present invention.
[Fig. 13] Fig. 13 is a view showing an exemplary search of the repeater according to Embodiment 2 of the present invention.
[Fig. 14] Fig. 14 is a flow chart showing an exemplary process for determining a terminal to be connected, in the repeater.

### Description of the Embodiments

A first example is a radio device including a receiver unit which receives a communication signal transmitted from an upper terminal; a level calculator unit for calculating a received signal level of the communication signal received in the receiver unit; a memory unit for storing a predetermined threshold level; and a connected target determiner unit for determining an upper terminal to be connected; characterized in that: the connected target determiner unit compares the received signal level calculated in the level calculator unit to the threshold level stored in the memory unit and changes a method for determining the upper terminal to be connected, based on a magnitude relationship between the received signal level and the threshold level. In such a configuration, it is possible to provide a radio device which can easily incorporate a network and has improved system constructability. In addition, by combining antenna diversity, route diversity, time diversity, etc., a communication area can be enlarged, traffic can be reduced, and the amount of current consumed in the radio (wireless) device can be suppressed.

A second example is such that when the receiver unit receives plural communication signals from plural upper terminals and received signal levels calculated from the plural communication signals include received signal levels which are not lower than the threshold level stored in the memory unit; the connected target determiner unit executes control to connect the radio device to an upper terminal which is smallest in the number of relay stages in a range from said upper terminal to a predetermined radio terminal, said upper terminal being selected from among upper terminals having received signal levels which are not lower than the threshold level. In such a configuration, a time (latency) required for communication in a radio network can be reduced, or the amount of current consumed in the radio device can be reduced.

A third example is such that when the receiver unit receives plural communication signals from plural upper terminals and all of plural received signal levels calculated in the level calculator unit are lower than a predetermined signal level; the connected target determiner unit executes control to connect the radio device to an upper terminal which is highest in the received signal level calculated in the received signal level calculator unit. In such a configuration, the radio device can be incorporated easily into the network, the communication area can be enlarged, and robust communication can be ensured. Furthermore, by combining antenna diversity control, route diversity control, time diversity control, etc., with the connection decided according to the above condition, a more stable connection can be established.

A fourth example is such that when the receiver unit receives plural communication signals from plural upper terminals and received signal levels calculated from the plural communication signals include received signal levels which are not lower than the threshold level stored in the memory unit; the connected target determiner unit executes control to connect the radio device to an upper terminal which is smallest in the number of lower terminals connected to said upper terminal, said upper terminal being selected from among upper terminals having received signal levels which are not lower than the threshold level. In such a configuration, the number of terminals connected on the network can be well-balanced, and the amount of current consumed can be reduced.

A fifth example is a radio communication system including as the radio device as recited in the first example a lowermost terminal, and plural relay terminals defined as upper terminals of the lowermost terminal, the plural relay terminals serving as relays between the lowermost terminal and an uppermost terminal; characterized in that: the lowermost terminal is configured in such a manner that: when the receiver unit in the lowermost terminal receives plural communication signals from plural upper terminals and received signal levels calculated from the plural communication signals include received signal levels which are not lower than the threshold level; the connected target determiner unit determines as a connected target, an upper terminal which is smallest in the number of relay stages in a range from the uppermost terminal to said upper terminal, said upper terminal being selected from among upper terminals having received signal levels which are not lower than the threshold level, or an upper terminal which is smallest in the number of lower terminals connected to said upper terminal, said upper terminal being selected from among upper terminals having received signal levels which are not lower than the threshold level; and when the receiver unit receives plural communication signals from plural upper terminals and all of received signal levels calculated from the plural communication signals are lower than the threshold level; the connected target determiner unit determines as a connected target, an upper terminal having a highest received signal level; the relay terminal is configured in such a manner that: when the receiver unit in the relay terminal receives plural communication signals from plural upper terminals and received signal levels calculated from the plural communication signals include received signal levels which are not lower than the threshold level; the connected target determiner unit determines as a connected target an upper terminal which is smallest in the number of relay stages in a range from the uppermost terminal to said upper terminal, said upper terminal being selected from among upper terminals having received signal levels which are not lower than the threshold level, or an upper terminal which is smallest in the number of lower terminals connected to said upper terminal, said upper terminal being selected from among upper terminals having received signal levels which are not lower than the threshold level; and when the receiver unit receives plural communication signals from plural upper terminals and all of received signal levels calculated from the plural communication signals are lower than the threshold level; the connected target determiner unit determines that the relay terminal is not connected to any one of the upper terminals. In such a configuration, the lowermost terminal can achieve the advantages similar to those of the first to fourth inventions, while reliability of the communication of the relay terminal can be enhanced because the relay terminal is configured not to be connected to the upper terminal having a received signal level which is lower than the threshold level.

Hereinafter, examples and embodiments of the present invention will be descried with reference to the drawings. Note that the present invention is not limited to the embodiments.

(Example 1)

Hereinafter, example 1 of the present invention will be described with reference to the drawings. Note that the present invention is not limited to the embodiments.

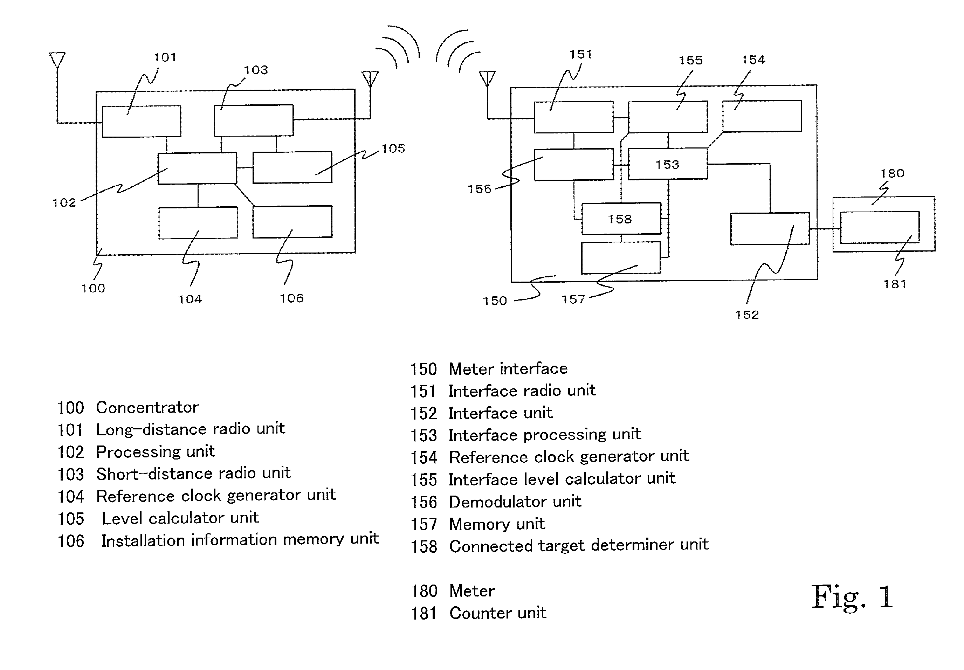

Fig. 1 is a block diagram of a concentrator which is an upper terminal or an uppermost terminal and a block diagram of a meter interface which is a lowermost terminal in a radio (wireless) communication system of the present example . The system of the present example comprises a concentrator 100, a meter interface 150 and a meter 180. First of all, respective blocks will be described.

The concentrator 100 includes a long-distance radio unit 101, a processing unit 102, a short-distance radio unit 103, a reference clock generator unit 104, a level calculator unit 105 and an installation information memory unit 106.

The long-distance radio unit 101 is constituted by a device for performing communication over a long distance. The processing unit 102 executes control so that communication is performed according to a protocol or specification predetermined between the radio units. The short-distance radio unit 103 performs communication with the meter interface 150 as described later. The reference clock generator unit 104 generates a reference timing at which the short-distance radio unit 103 performs communication synchronously with the meter interface 150. The level calculator unit 105 calculates a signal level of a signal which is transmitted from the meter interface 150 and received in the short-distance radio unit 103. The installation information memory unit 106 stores as installation information of the concentrator 100, for example, an installation height of the concentrator, a surrounding situation, an environment, etc..

The meter interface 150 includes an interface radio unit 151, an interface unit 152, an interface processing unit 153, a reference clock generator unit 154, an interface level calculator unit 155, a demodulator unit 156, a memory unit 157, and a connected target determiner unit 158.

The interface radio unit 151 performs communication with the concentrator 100. The interface unit 152 reads a number counted by a counter unit 181 of the meter 180. The interface processing unit 153 controls the interface unit 152 on a regular basis or controls the interface radio unit 151 according to a predetermined sequence or protocol. The reference clock generator unit 154 generates a reference clock according to which the meter interface 150 performs communication synchronously with the concentrator 100. The interface level calculator unit 155 calculates a signal level of a signal received in the interface radio unit 151, from the concentrator 100. The demodulator unit 156 generates demodulated data from data processed in the interface radio unit 151, according to a predetermined protocol. The memory unit 157 stores a predetermined threshold (search condition threshold) relating to a signal level for changing a search rule used when the interface radio unit 151 in the meter interface 150 searches the concentrator 100 to be connected to the meter interface 150. The connected target determiner unit 158 determines (decides) an upper terminal to be connected to the meter interface 150, based on the signal level of the received signal, the number of lower terminals connected to the concentrator 100, etc..

Now, a process for determining (deciding) the connected target will be described. For example, the interface level calculator unit 155 calculates a signal level, and if there exist plural signals of the concentrators which could be demodulated in the demodulator unit 156, the connected target determiner unit 158 performs determination as follows. If the outputs (signal levels) of the interface level calculator unit 155 are not lower than the search condition threshold stored in the memory unit 157, the connected target determiner unit 158 selects as the connected target, a concentrator connected with lower terminals of a smallest number. If there exist only outputs (signal levels) of the interface level calculator unit 155 which are lower than the search condition threshold stored in the memory unit 157, the connected target determiner unit 158 performs control so that the meter interface 150 is connected to a concentrator corresponding to a greatest output value of the interface level calculator unit 155.

Next, a more specific configuration example of the concentrator 100 will be described. The long-distance radio unit 101 in the concentrator 100 is a radio unit of a standard used in cellular phones, and others, and is implemented by a functional configuration such as GSM (Global System for Mobile Communications), GPRS (General Packet Radio Service), or EDGE (Enhanced Data GSM Environment), for example. The long-distance radio unit 101 is connected to a supervising server via a public line or a network. The supervising server is capable of monitoring the state of the concentrator 100, manipulating the concentrator 100, supervising the concentrator 100, etc.. As a hardware configuration, the concentrator 100 includes an antenna, a low noise amplifier, a detector, an oscillator circuit, a mixer, a phase-locked loop, a frequency divider, a demodulator circuit, a modulator circuit, a power amplifier, a voltage controlled oscillator circuit, a processor having the above function, etc..

The short-distance radio unit 103 is a communication unit which outputs a transmission signal equivalent to or lower than a transmission signal output from the long-distance radio unit 101 and performs communication with the meter interface 150 connected as a lower terminal. The short-distance radio unit 103 includes an antenna, a low noise amplifier, a detector, an oscillator circuit, a mixer, a phase-locked loop, a frequency divider, demodulator circuit, modulator circuit, a power amplifier, a voltage controlled oscillator circuit, a processor having the above function, etc..

The level calculator unit 105 includes an A/D converter circuit, a comparator, a detector circuit, a clock circuit, a calculator circuit, etc., to calculate a level of the signal received in the short-distance radio unit 103.

The installation information memory unit 106 stores installation information of, for example, the installation height of the concentrator 100, the surrounding situation of the concentrator 100, the environment of the concentrator 100, etc., as described above, and is constituted by a nonvolatile memory, a microcomputer, etc..

The processing unit 102 controls the state of the concentrator 100, in accordance with a command from the upper order which is received in the long-distance radio unit 101 in the concentrator 100, or obtains information of the meter 180 via the interface radio unit 151 in the lower meter interface 150 as a lower terminal. The processing unit 102 is constituted by a microcomputer, a storage for storing data or programs, etc..

The reference clock generator unit 104 includes an oscillator circuit (e.g., oscillator circuit constituted by a quarts oscillator, a ceramic oscillator, a capacitor, a transistor, an inductor, etc.), and a temperature correction circuit, to generate a reference clock required to perform synchronous communication with the meter interface, etc..

Subsequently, a specific configuration example of the meter interface 150 will be described. The interface radio unit 151 in the meter interface 150 is a radio unit for performing communication with another short-distance radio device including the concentrator 100. The interface radio unit 151 includes an antenna, a low noise amplifier, a detector, an oscillator circuit, a mixer, a phase-locked loop, a frequency divider, a modulator circuit, a power amplifier, a voltage controlled oscillator circuit, a processor having the above function, etc..

The reference clock generator unit 154 includes an oscillator circuit (oscillator circuit constituted by a quarts oscillator, a ceramic oscillator, a capacitor, a transistor, an inductor, etc.), or the like, and a temperature correction circuit, to generate a reference clock required to perform synchronous communication with the meter interface, etc..

The interface unit 152 is capable of detecting a motion of the counter unit 181 in the meter 180. For example, the interface unit 152 is constituted by a sensor for sensing a motion of the counter unit 181, such as a reed switch, a coil, or an electrostatic sensor, a semiconductor device, etc..

The interface processing unit 153 is constituted by a microcomputer, a storage for storing data or programs, etc..

The interface level calculator unit 155 calculates the level of the signal which is transmitted from another radio device and received in the interface radio unit 151, and includes an A/D converter circuit, a detector circuit, a comparator, a microcomputer, etc..

The demodulator unit 156 is configured to demodulate another signal received in the interface radio unit 151, according to a predetermined protocol, etc., and includes a waveform shaping circuit, a detector circuit, a level convertor circuit, a microcomputer, etc..

The memory unit 157 is constituted by a nonvolatile memory, a microcomputer, etc., to store a search condition threshold to be changed when the meter interface 150 searches the concentrator 100 to be connected to the meter interface 150.

The connected target determiner unit 158 is constituted by a microcomputer, etc., to compare the search condition threshold stored in the memory unit 157 to the signal level output from the interface level calculator unit 155 and to determine a search condition of an upper terminal to be connected.

The meter 180 is a meter for supervising a usage amount or flow rate of a gas meter, a tap water meter, an electric power meter, a current meter, a pressure meter, a flow meter, a calorie meter, etc.. The counter unit 181 is incorporated with a sensor unit for counting the usage amount or flow rate, such as a pressure sensor, a measuring cup, a flow sensor of an ultrasonic wave, etc..

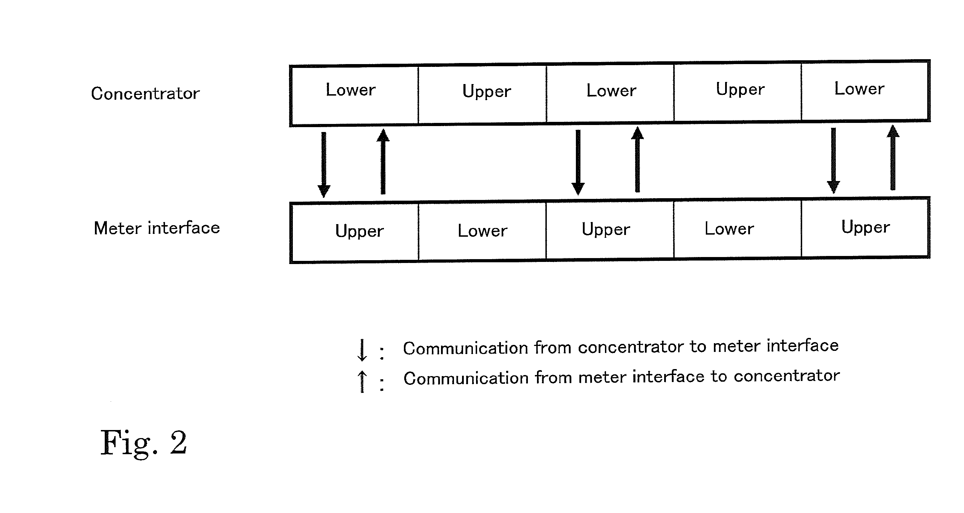

Subsequently, a communication scheme between the concentrator 100 and the meter interface 150 will be described with reference to Fig. 2. Fig. 2 shows time slots according to which communication is performed between the concentrator 100 and the meter interface 150.

Each of the concentrator 100 and the meter interface 150 divides the time slot into an upper time slot and a lower time slot and defines a transmission time period and a reception time period according to the time slot. The time slot of the concentrator 100 and the time slot of the meter interface 150 are synchronized with each other according to clocks and the like owned by the corresponding hardware. In addition, there is a match between the respective time slots within a certain time. Thus, communication between them is established. For example, as shown in Fig. 2, the time slot of the concentrator is divided into an upper time slot and a lower time slot, and the lower time slot indicates a time slot for which the concentrator performs communication with the meter interface 150 connected as a lower terminal to the concentrator. The upper time slot of the time slot of the meter interface 150 indicates a time slot for which the meter interface 150 performs communication with the concentrator to be connected to the meter interface 150. Although in the present example the concentrator is the upper terminal and the meter interface is the lower terminal, they may be reversed.

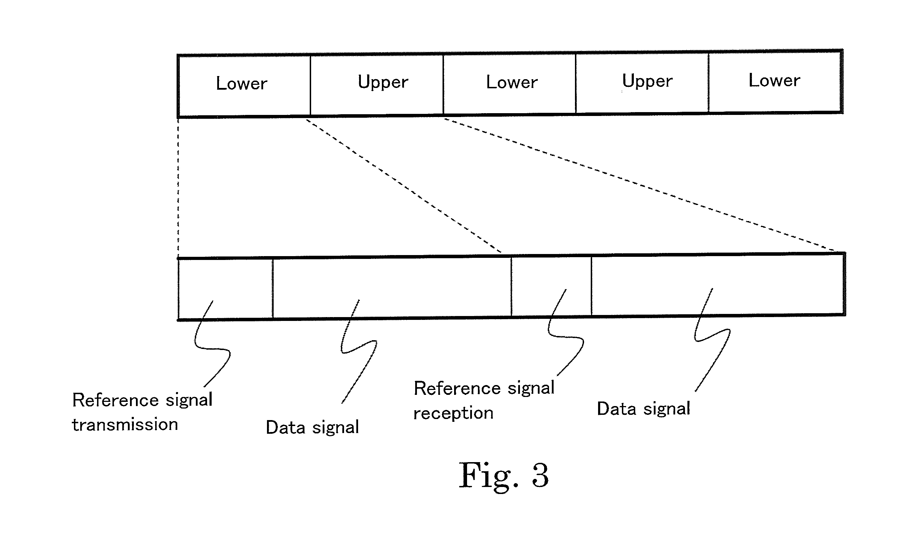

Subsequently, the time slots of Fig. 2 will be described in more detail. Fig. 3 is a view showing a detailed content of the time slot. As shown in Fig. 3, the lower slot is divided into a reference signal transmission slot for which a reference signal (e.g., beacon signal) is transmitted, and a data signal slot for which a data signal (e.g., signal containing information of a telegram format) is transmitted and received. The reference signal transmission slot is a time slot for which the reference signal is transmitted from the concentrator (upper terminal) to the meter interface (lower terminal). For this time slot, the concentrator transmits a predetermined reference signal. The data signal slot is a time slot for which a signal of a telegram format which is longer in length than the reference signal is transmitted and received only when necessary, according to a specification predetermined between the concentrator and the meter interface.

In contrast, the upper slot is divided into a reference signal reception slot for which a reference signal is received, and a data signal slot for which a data signal is transmitted and received. The reference signal reception slot is a time slot for which the reference signal is received, the signal being transmitted from the concentrator (upper terminal) to the meter interface (lower terminal). For this time slot, the meter interface receives a predetermined reference signal on a regular basis. The data signal slot is a time slot for which a signal of, for example, a telegram format which is longer in length than the reference signal, is transmitted and received only when necessary, according to a specification predetermined between the concentrator and the meter interface, like the lower slot.

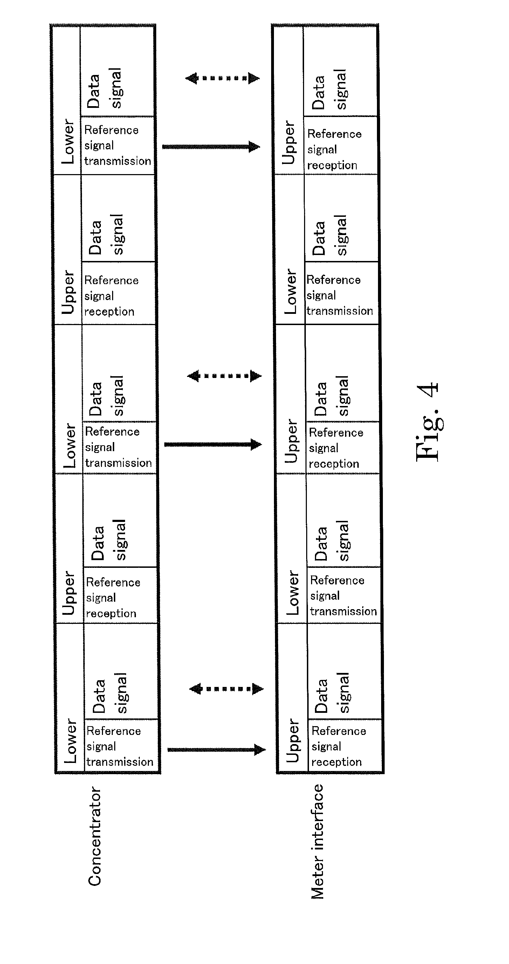

Next, the communication performed between the concentrator and the meter interface will be described with reference to Fig. 4. Fig. 4 represents the contents of Fig. 2 and 3 collectively, regarding the time slot of the concentrator and the time slot of the meter interface. The time slot of the concentrator and the time slot of the meter interface are synchronized with each other, as shown in Fig. 4.

As shown in Fig. 4, the concentrator transmits the reference signal toward the meter interface at a timing of the reference signal transmission slot of the lower slot. The meter interface receives the reference signal at a timing of the reference signal reception slot of the upper slot. In the data communication slot, communication takes place only when it is necessary to transmit and receive the data signal based on a predetermined specification.

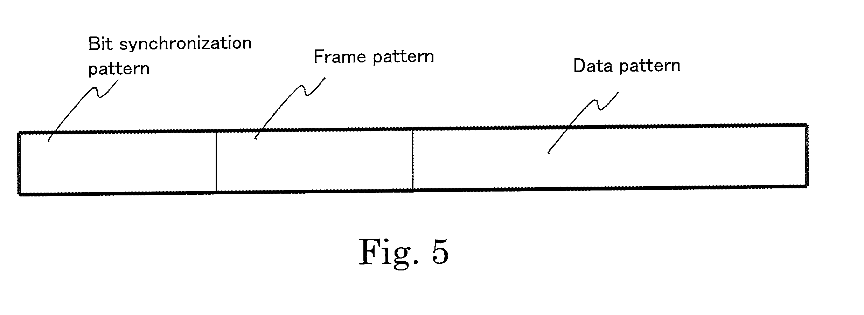

Subsequently, a telegram format of the data signals transmitted from the concentrator 100 and the meter interface 150 will be described with reference to Fig. 5. Fig. 5 represents an exemplary telegram format of the data signals used in the respective time slots of the concentrator and the meter interface shown in Fig. 4.

As shown in Fig. 5, the telegram format is composed of a bit synchronization pattern, a frame pattern, and a data pattern. The bit synchronization pattern is a signal in which "0" and "1" are repeated alternately and which is located at a head of the telegram format. The frame pattern is a data string used to allow the concentrator and the meter interface to recognize that the corresponding telegram is a telegram for use in the system of the present invention, and is data unique to this system. The data pattern is data complying with a predetermined protocol, and is a data string containing, for example, an ID code of a transmitting device, an ID code of a receiving device (destination) of the transmitted signal, various control signals, various information, etc.. In addition, the data pattern contains an installation evaluation value of an upper terminal, information of the number of relay stages of the upper terminal, and information of the number of lower terminals already connected to the upper terminal.

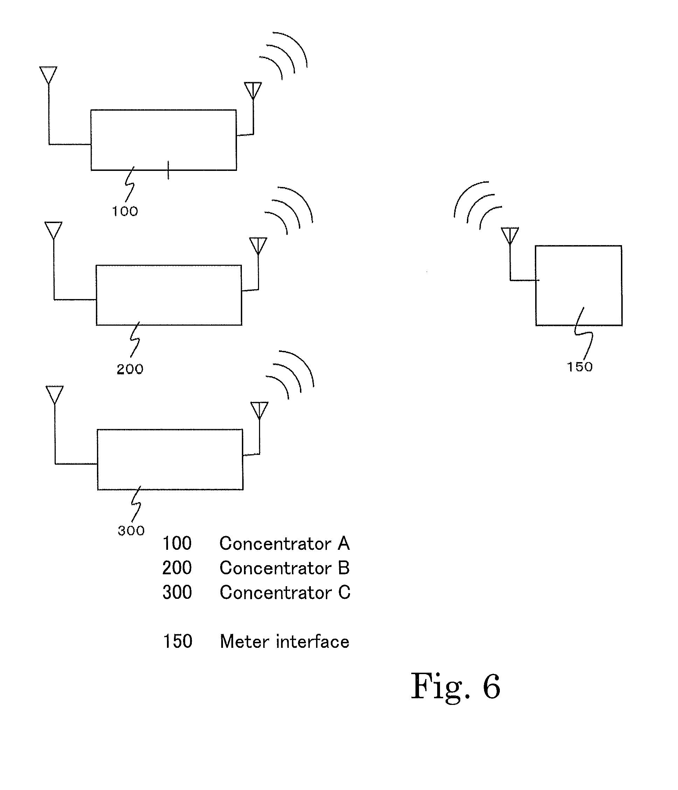

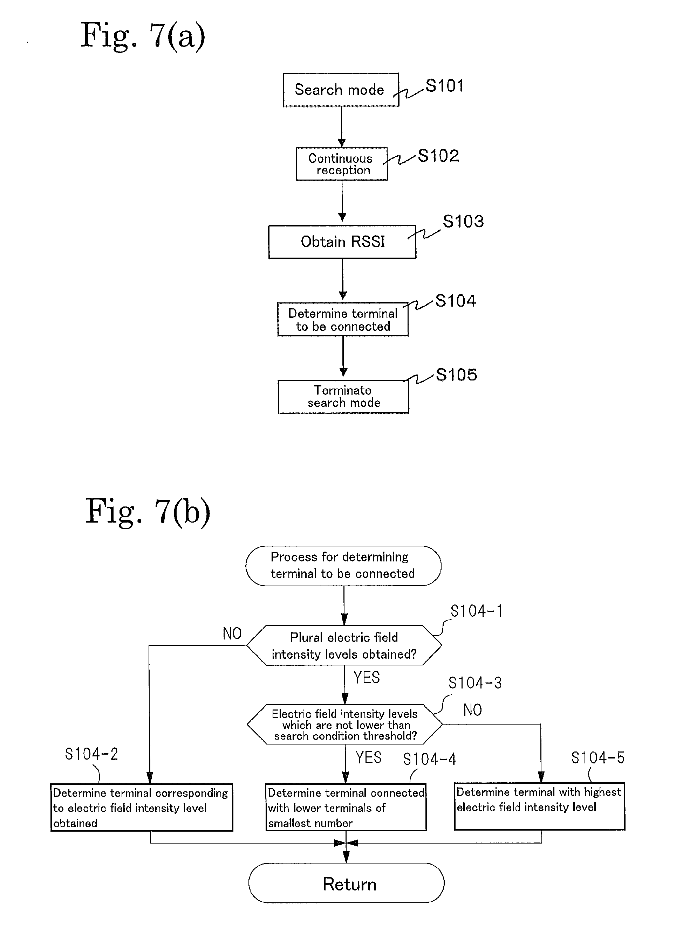

Subsequently, a description will be given of a procedure according to which the meter interface of Fig. 1 searches the concentrator with which the meter interface should perform communication, with reference to Figs. 6 and 7.

Fig. 6 is a view showing a configuration in which the radio communication system of the present example includes plural concentrators. As shown in Fig. 6, the system of the present example is placed in an environment in which three concentrators 100, 200, and 300 and a single meter interface 150 are installed. Now, a description will be given of a method in which the meter interface 150 searches the concentrator with which the meter interface 150 performs communication.

Fig. 7(a) is a view showing a sequence according to which the meter interface of Fig. 6 searches a concentrator to be connected to this meter interface. Fig. 7(b) is a flowchart showing a detailed content of a process for determining a terminal to be connected, in Fig. 7(a). Along the flowchart of Fig. 7(a), a description will be given of the procedure according to which the meter interface 150 searches the concentrator to be connected to the meter interface 150.

Initially, the meter interface 150 shifts at a predetermined timing to a mode (search mode) in which the meter interface 150 searches a concentrator to be connected to the meter interface 150, the mode being different from a communication mode in which a normal meter reading value, an abnormality of a flow rate, and others are transmitted and received (S101). The predetermined timing may be suitably set. For example, the predetermined timing may be a time point when an operator for installing the meter interface 150 inputs a predetermined operation signal to the meter interface 150, a regular timing preset, or a time point after a time period for which a state where communication in the normal mode is unfeasible continues has passed.

In the search mode, the meter interface 150 performs control so that the interface radio unit 151 receives data continuously for a predetermined period of time (S102). During the period of time for which the signal is received continuously, in the meter interface 150, the interface radio unit 151 receives the reference signal transmitted from the concentrator on a regular basis, and the interface level calculator unit 155 converts the reference signal into RSSI (received signal strength indicator) level to obtain an electric field intensity level between the concentrator and the meter interface 150. If the meter interface 150 receives the signals from plural concentrators, the interface level calculator unit 155 calculates the electric field intensity levels respectively corresponding to these concentrators (S103). Then, the connected target determiner unit 158 reads the search condition threshold from the memory unit 157, compares the read search condition threshold to the electric field intensity level calculated in step S103, and determines which of the concentrators the meter interface 150 should be connected to (S104).

The process for determining the terminal to be connected in step S104 will be described in more detail with reference to Fig. 7(b). The meter interface 150 determines whether or not the meter interface 150 has received the reference signals from the plural concentrators, in other words, there exist plural electric field intensity levels obtained (S104-1). In this case, if the meter interface 150 has received the reference signal only from one concentrator, one electric field intensity level is obtained. If it is determined that one electric field intensity level is obtained (S104-1: NO), the meter interface 150 determines that the concentrator which has transmitted the reference signal received in the meter interface 150, as the terminal to be connected to the meter interface 150 (S104-2).

On the other hand, if it is determined that there exist plural electric field intensity levels calculated (S104-1: YES), the meter interface 150 determines (decides) the connected target as follows. To be specific, the meter interface 150 determines whether or not there exists an electric field intensity level which is not lower than the search condition threshold, among the plural electric field intensity levels obtained (S104-3). If it determined that there is such an electric field intensity level (S 104-3: YES), the meter interface 150 determines a concentrator already connected with lower terminals of a smallest number, from the concentrators which transmit the reference signals indicating such electric field intensity levels, as the terminal to be connected to the meter interface 150 (S104-4), and executes control so that the meter interface 150 is connected to that concentrator.

On the other hand, if it is determined that there does not exist a concentrator which can perform communication with the electric field intensity level which is not lower than the search condition threshold (S104-3: NO), the meter interface 150 connects the concentrator having an electric field intensity level which is lower than the search condition threshold. If there exist plural concentrators having electric field intensity levels which are lower than the search condition threshold, the meter interface 150 determines (decides) a concentrator having a highest electric field intensity level as the terminal to be connected to the meter interface 150, from among these concentrators (S 104-5). In the manner as described above, the meter interface 150 determines (decides) the terminal to be connected to the meter interface 150 based on the electric field intensity levels and the number of lower terminals already connected to the concentrator (S 104-2, S 104-4, S 104-5), and completes the process for determining the terminal to be connected (S104). When the meter interface 150 determines (decides) the concentrator connected to the meter interface 150 in S104, the meter interface 150 terminates the search mode (S105).

Note that the flowchart shown in Fig. 7(b) is merely exemplary, and the process for determining the terminal to be connected is in no way limited to the procedure shown in this flow chart. To be specific, if there exist concentrators having electric field intensity levels which are not lower than the search condition threshold, a concentrator connected with the lower terminals of a smallest number is selected, from these concentrators. If there exist only concentrators having electric field intensity levels which are lower than the search condition threshold, a concentrator having a highest electric field intensity level may be selected and the selected concentrator may be determined (decided) as the terminal to be connected to the meter interface 150.

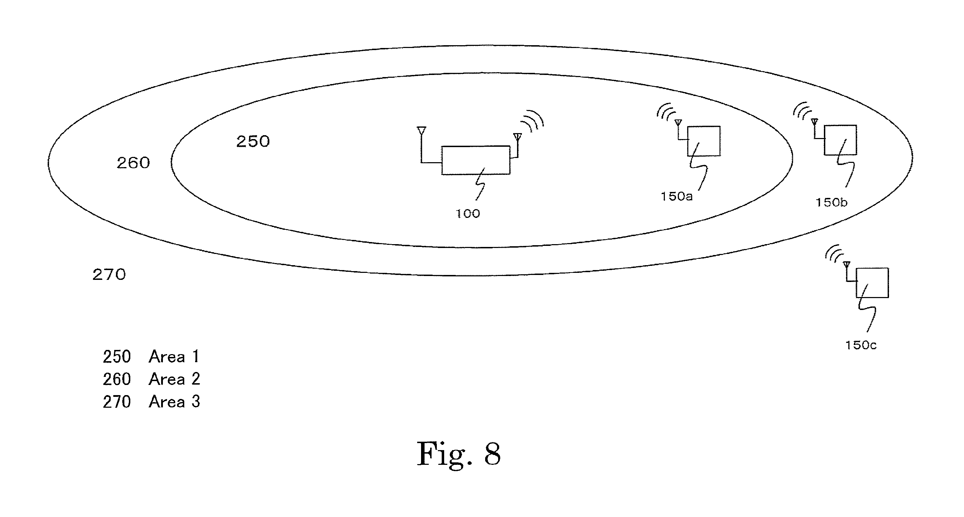

Next, a method of determining (deciding) the search condition threshold will be described with reference to Fig. 8. Fig. 8 schematically shows areas according to respective electric field intensity levels among the concentrator 100, a meter interface A(150a), a meter interface B (150b), and a meter interface C (150c).

Area 1 (250) is an area in which communication is supposed to be surely successful when radio communication is performed between the concentrator 100 and the meter interface A (150a) located in the area 1 (250). That is, the area 1 (250) is defined as the area in which communication is surely performed, in view of the specification of the radio device of the concentrator 100 and the specification of the radio device of the meter interface A (150a), fluctuating factors such as fading and influence caused by blocking objects under environments in which the respective terminals are installed, a noise in a surrounding environment, etc., and in view of a desired margin. The term "specification of the radio device" refers to an antenna performance, a specification of a transmitted signal, a specification of a noise level of an amplifier, a receiving sensitivity, etc..

Area 2 (260) is an area in which communication is supposed to be successful in a certain rate when communication is performed between the concentrator 100 and a meter interface B (150b) located in the area 2 (260). This is, for example, an area in which a communication success rate is not 100%, due to, for example, the fading or the noise in the surrounding environment. The area 2 (260) is not an area in which communication is unfeasible completely, but an area in which the communication success rate can be brought close to 100% by, for example, re-transmission control using the time diversity, using the route diversity which uses a route different from a route in a network constructed up to now, or using the antenna diversity, even if the communication fails.

Area 3 (270) is an area in which communication is supposed to be substantially unsuccessful even if communication is performed between the concentrator 100 and a meter interface C (150c) located in the area 3 (260). In this area, an electric wave transmitted from each terminal is equal to or lower than a level of a surrounding noise or a noise existing in the radio device, and therefore success of the communication cannot be expected.

The search condition threshold is a numeric value representing a boundary between the area 1 (250) and the area 2 (260). Therefore, if there exist plural concentrators having electric field intensity levels which are not lower than the search condition threshold, that is, if there exist plural concentrators located within the area 1 (250), in the case where the meter interface searches the concentrator 100 to be connected to the meter interface, the communication success rate is 100%, regardless of which one of the concentrators is selected, when only the communication success rate is noted. This allows the connected target to be selected based on another condition. For example, the connected target can be selected (see step S 104-4 in Fig. 7(b)) based on the number of meter interfaces (lower terminals) already connected to the concentrator 100 which is the upper terminal, in addition to the communication success rate. On the other hand, in a case where a meter interface located in the area 2 (260) searches a concentrator to be connected to the meter interface, from among plural concentrators, there exist plural concentrators (concentrators with a communication success rate which is less than 100%) capable of possibly performing communication with a certain success rate, rather than 100%. In this case, in order to improve the communication success rate, it is desirable to select a concentrator having a highest electric field intensity level (see step S104-5 in Fig. 7(b)).

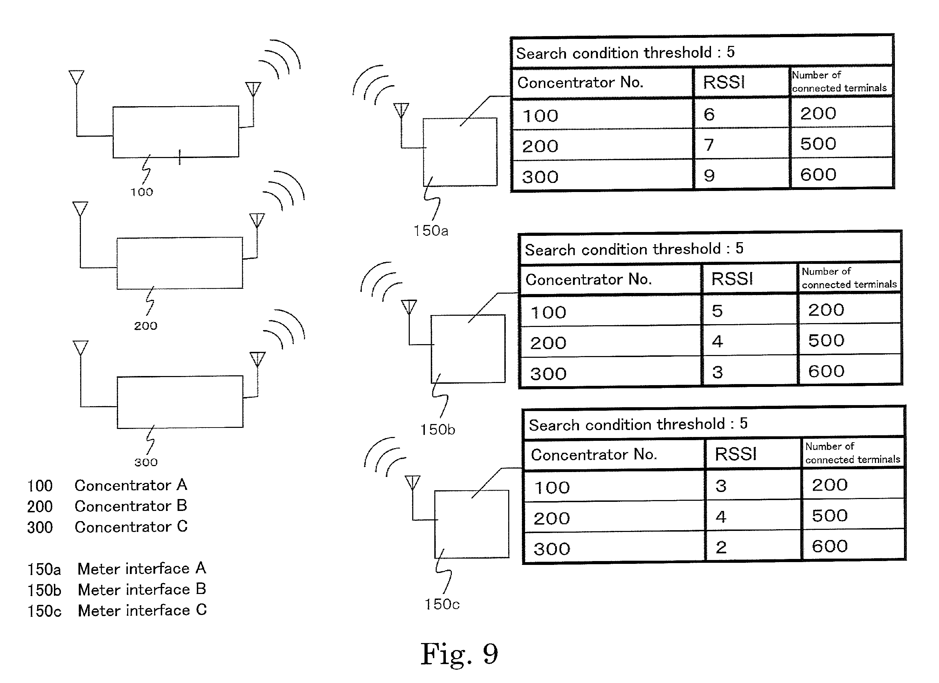

Subsequently, a description will be given of a determination method in the case where the meter interface searches the concentrator, with reference to Fig. 9. In the example shown in Fig. 9, the meter interface A (150a), the meter interface B (150b), and the meter interface C (150c) are installed. Hereinafter, examples in which the respective meter interfaces select concentrators to be connected to themselves, from among a concentrator A(100), a concentrator B (200), and a concentrator C (300), will be described sequentially.

For each meter interface, there exist three concentrators 100, 200, 300 which transmit reference signals to each meter interface Fig. 9 also shows the electric field intensity levels (RSSI levels) of the reference signals transmitted from the three concentrators and received in the interface radio unit 151, the electric field intensity levels being calculated based on the received signals in the interface level calculator unit 155.

The meter interface A (150a) calculates RSSIs of the reference signals received from the concentrator 100, the concentrator 200, and the concentrator 300, and obtains the values of 6, 7, and 9, respectively. A search condition threshold pres-stored in the memory unit 157 in the meter interface A (150a) is "5", and therefore, calculated RSSIs are all not lower than the search condition threshold (see YES in S 104-3 in Fig. 7(b)). Therefore, the connected target determiner unit 158 in the meter interface A (150a) obtains information pertaining to the number of connected lower terminals, from information of a data signal transmitted from the concentrator. The number of lower terminals already connected to the concentrator A (100) is 200, the number of lower terminals already connected to the concentrator B (200) is 500, and the number of lower terminals already connected to the concentrator C (300) is 600. Therefore, the meter interface A (150a) performs control such that the meter interface A (150a) is connected to the concentrator A (100) connected with the lower terminals of a smallest number (see S 104-4 in Fig. 7(b)).

Likewise, the meter interface B (150b) obtains RSSIs of the reference signals received from the concentrator A(100), the concentrator B(200), and the concentrator C(300), which are 5, 4, and 3, respectively. In this case, a concentrator which satisfies a condition that the electric field intensity level is not lower than the search condition threshold (5) (see YES in S104-3 in Fig. 7(b)), is only the concentrator A (100). This means that the concentrator A (100) is a concentrator already connected with lower terminals of a smallest number, among the concentrators having RSSIs which are not lower than the search condition threshold (see S 104-4 in Fig. 7(b)). Therefore, it is decided that the meter interface B (150b) is to be connected to the concentrator A (100).

Likewise, the meter interface C (150c) obtains RSSIs of the reference signals received from the concentrator A(100), the concentrator B(200), and the concentrator C(300), which are "3," "4", and "2," respectively. Since the search condition threshold is 5, there exists no concentrator which satisfies this condition (see NO in S104-3 in Fig. 7(b)). Therefore, as a connected target, the concentrator B (200) having a highest RSSI is selected (see S 104-5 in Fig. 7(b)).

In the radio communication system decided according to above search rule, there is a high chance that a terminal determined (decided) as a search route, with an electric field intensity level which is not lower the search condition threshold, can surely perform communication without time diversity control, route diversity control, or antenna diversity control, and therefore, such control can be omitted. Regarding a terminal determined (decided) having an electric field intensity level which is lower than the search condition threshold, it is expected that the terminal can perform communication using any of the above mentioned diversities if communication fails. For this reason, it is desired that the meter interface of the present example have a configuration for executing one or plural of the above diversity functions.

As described above, in the present example in the system in which the upper terminals transmit the reference signal on a regular basis or at predetermined timings, the upper terminal search rule is changed based on the RSSI levels of the signals received from the upper terminals. In such a configuration, a communication area of the system can be enlarged and a robust communication rule can be established by combining the diversities. In addition, for the terminal located in the area where communication can be performed surely, control for ensuring robustness can be omitted. This contributes to reduction of a traffic, or reduction of electric power consumption.

Furthermore, since a wider communication area can be ensured, the number of upper terminals installed can be reduced, which leads to reduction of an introduction cost of the system and reduction of a maintenance cost of the terminals installed. Moreover, since each terminal uses the rule for searching the connected target, a route can be constructed using only the terminals installed in a situation where all of the terminals in the overall system are not installed. This improves flexibility with which the system is constructed.

Moreover, the above method may be applied in the same manner to even a case where a repeater serving as a relay joins in the communication performed between the concentrator and the meter interface. To be specific, by assuming that the concentrator is the upper terminal and the repeater is the lower terminal, the above method may be applied to the search of the connected target which is performed between the upper terminal and the lower terminal. In the same manner, the above method may be applied to the search of the connected target which is performed between the repeater which is the upper terminal and the meter interface which is the lower terminal, and the search of the connected target which is performed between the repeater which is the upper terminal and the repeater which is the lower terminal.

### (Embodiment 2)

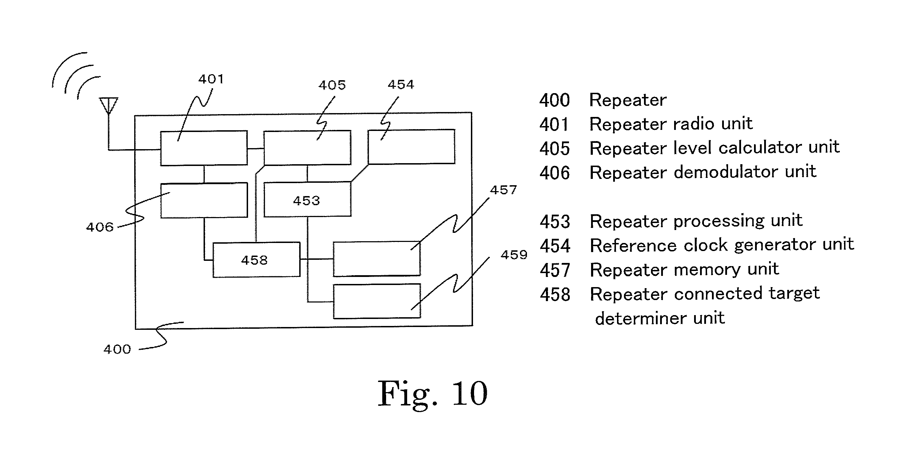

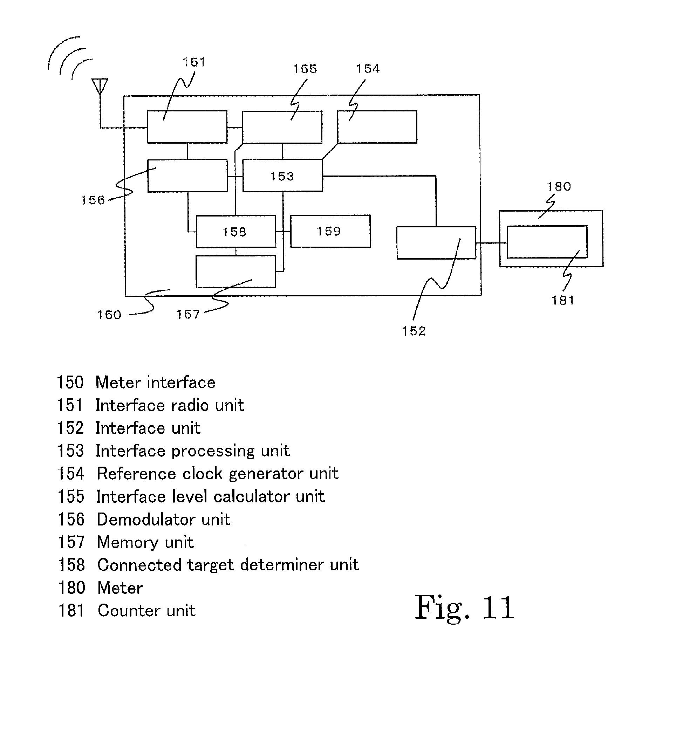

Next, a description will be given of a route searching method in a radio communication system including concentrators, repeaters, and meter interfaces. In Embodiment 2, a difference between example 1 and Embodiment 2 will be described. It is supposed that the concentrator has the configuration shown in Fig. 1 in example. 1. Initially, the internal configuration of the repeater and the internal configuration of the meter interface will be described, with reference to Figs. 10 and 11.

Fig. 10 is a block diagram showing an internal configuration of the repeater. The repeater is used in a case where communication which keeps a predetermined electric wave intensity cannot be realized, due to a long communication distance over which the communication is performed between the concentrator and the meter interface, or a case where a stable communication cannot be performed between the terminals due to the fact that a building structure, a road, and others blocks or attenuates an electric wave. The repeater serves as a relay for communication between the concentrator and the meter interface to ensure a communication path, or to amplify an electric wave intensity which has been lowered due to shadowing.

The repeater 400 includes a repeater radio unit 401, a repeater level calculator unit 405, a repeater demodulator unit 406, a repeater processing unit 453, a reference clock generator unit 454, a repeater memory unit 457, and a repeater connected target determiner unit 458. The repeater radio unit 401 performs communication with the concentrator or the meter interface. The repeater level calculator unit 405 calculates a signal level of a signal transmitted from the concentrator or the meter interface and received in the repeater radio unit 401. The repeater demodulator unit 406 performs demodulation based on a protocol or specification communication predetermined among the concentrator, the meter interface and the repeater. The repeater processing unit 453 controls the communication of the repeater of this repeater processing unit 453 based on the output of the repeater demodulator unit 406. The reference clock generator unit 454 generates a reference timing at which communication is performed synchronously with each terminal. The repeater memory unit 457 stores a threshold (search condition threshold) which is a criterion used to determine whether or not to change the search condition used to search a communication route in the radio communication between the repeater 150 and the concentrator or another repeater. Alternatively, the repeater memory unit 457 may store the number of relay stages from a concentrator which is an uppermost terminal to the repeater of the repeater memory unit 457, as installation information.

The repeater connected target determiner unit 458 determines (decides) an upper terminal to be connected to the repeater 400 based on electric field intensity levels of signals from the upper terminals and the number of relay stages in a current state of the upper terminals. The outline of the process for determining (deciding) a connected target will be explained. In the repeater 400, the repeater level calculator unit 405 calculates electric field intensity levels of plural signals transmitted from plural upper terminals such as concentrators or another repeaters. The repeater 400 compares the calculated electric field intensity levels to a threshold stored in the repeater memory unit 457, to determine (decide) the connected target. If there exist plural upper terminals having electric field intensity levels which are higher than the threshold, the repeater connected target determiner unit 458 selects an upper terminal which is smallest in the number of relay stages of upper terminals, as the connected target, based on the installation information transmitted from the upper terminals (concentrators or repeaters). On the other hand, if there exist only upper terminals having electric field intensity levels which are lower than the threshold, the repeater connected target determiner unit 458 selects an upper terminal having a highest electric field intensity level, as the connected target.

The repeater radio unit 401 in the repeater 400 is a radio unit for performing communication with another short-distance radio devices including a concentrator and a meter interface. The repeater radio unit 401 is configured to include an antenna, a low noise amplifier, a detector, an oscillator circuit, a mixer, a phase-locked loop, a frequency divider, a demodulator circuit, a modulator circuit, a power amplifier, a voltage controlled oscillator circuit, a processor having the above function, etc.. Note that a common hardware specification used in the concentrator and the repeater and a common hardware specification used in the repeater and the meter interface need not be the same. For example, in the specification defined between the concentrator and the repeater, a band which allows the use of a high transmission output so that the electric wave reaches a farther point over a long distance, is used, while in the specification defined between the repeater and the meter interface, communication may be performed with a low output in a relatively low frequency band to achieve electric power saving. Of course, the same specification may be used.

The reference clock generator unit 454 includes an oscillator circuit (e.g., oscillator circuit or the like constituted by a quarts oscillator, a ceramic oscillator, a capacitor, a transistor, an inductor, etc.), and a temperature correction circuit, to generate a reference clock required to perform synchronous communication with the meter interface, etc..

Subsequently, a difference between the meter interface of Embodiment 2 and the meter interface of Fig. 1 will be described with reference to Fig. 11. The connected target determiner unit 158 in the meter interface 150 of Fig. 11 compares a search condition threshold pre-stored in the memory unit 157 to electric field intensity levels generated from reference signals transmitted from concentrators or repeaters which are upper terminals. If there exist plural electric field intensity levels which are not lower than the search condition threshold, the connected target determiner unit 158 determines (decides) a connected target based on the installation information transmitted from the upper terminals (concentrators or repeaters). To be specific, the connected target determiner unit 158 selects as a connected target, an upper terminal which is smallest in the number of relay stages, from among upper terminals which are connected target candidates. On the other hand, if there exist electric field intensity levels which are lower than the search condition threshold, the connected target determiner unit 158 selects as a connected target, an upper terminal having a highest electric field intensity level, from among them.

As used herein, the installation information refers to information relating to the number of relay stages from the uppermost concentrator to the associated upper terminal, among terminals which have already established routes. As described above, the installation information may be stored in the repeater memory unit 457 in each repeater 400 already installed.

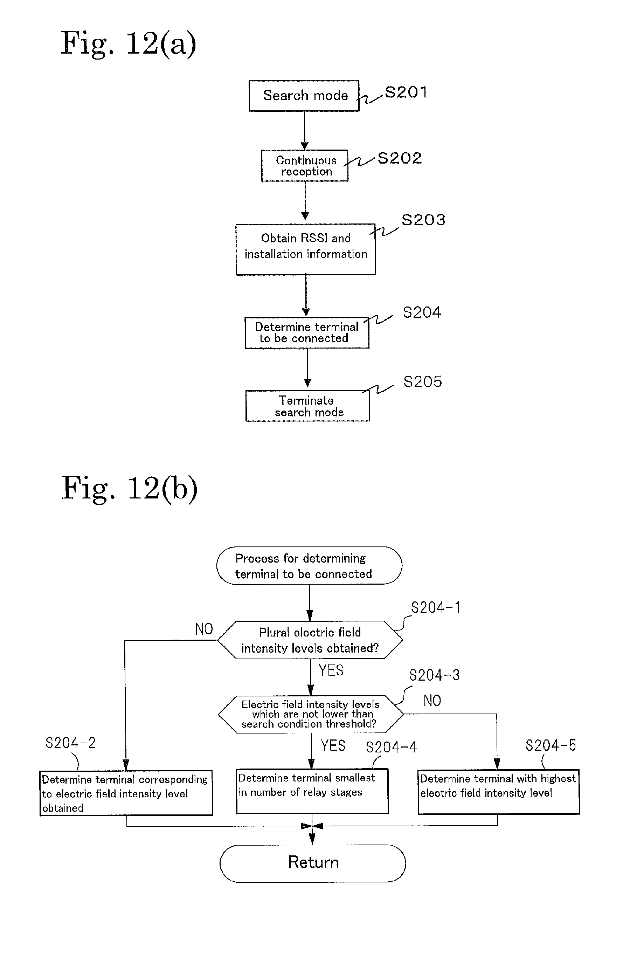

Subsequently, a description will be given of a sequence according to which the meter interface 150 searches a repeater to be connected to the meter interface 150, along Fig. 12(a). Now, a case where the meter interface is connected to an upper repeater will be exemplarily described. Note that a similar sequence is used in a case where the repeater is connected to an upper concentrator or another repeater, or in a case where the meter interface is connected to the concentrator.

Initially, the meter interface shifts at a predetermined timing to a mode (search mode) in which the meter interface searches the concentrator to be connected to the meter interface, the mode being different from a communication mode in which a normal meter reading value, an abnormality of a flow rate, and others are transmitted and received (S201). This timing may be similar to the predetermined timing described in example 1, or another timing may be used.

In the search mode, the meter interface executes control so that the interface radio unit 151 receives a signal continuously for a predetermined period of time (S202). During the period of time when the signal is received continuously, in the meter interface, the interface radio unit 151 receives a reference signal transmitted from the repeater on a regular basis, and the interface level calculator unit 155 converts the reference signal into an RSSI level to obtain an electric field intensity level between the repeater and the meter interface 150. Concurrently with this, the signal transmitted from the repeater is demodulated to obtain installation information of the repeater (S203). As described above, the installation information contains the number of relay stages which is the number of terminals as relays when communication is performed with the concentrator via that repeater.

Then, the meter interface compares the RSSI level obtained in step of S203 to the search condition threshold stored in the repeater memory unit 457, and determines which of the repeaters to which the meter interface is connected (S205). The process for determining the terminal to be connected in step S205 will be described in more detail with reference to Fig. 12(b). Initially, the meter interface determines whether or not the meter interface has received reference signals from the plural repeaters, in other words, there exist plural electric field intensity levels obtained (S204-1). In this case, if the meter interface has received the reference signal only from one repeater, one electric field intensity level is obtained. If it is determined that one electric field intensity level is obtained (5204-1: NO), the meter interface determines that the repeater which has transmitted the reference signal received in the meter interface, as the terminal to be connected to the meter interface (S204-2).

On the other hand, if it is determined that there exist plural electric field intensity levels calculated (S204-1: YES), the meter interface determines the connected target as follows. To be specific, the meter interface determines whether or not there exists an electric field intensity level which is not lower than the search condition threshold, among the plural electric field intensity levels obtained (S204-3). If it is determined that there exists such an electric field intensity level (S204-3: YES), the meter interface determines as a connected terminal, a repeater which is smallest in the number of relay stages, based on the installation information, from among repeaters which transmit reference signals indicating such electric field intensity levels (S204-4).

On the other hand, if it is determined that the obtained RSSI levels are lower than the installation condition threshold (S204-3: NO), the meter interface determines a repeater having a highest RSSI level as a terminal to be connected to the meter interface 150 (S204-5). In the above described manner, the meter interface determines a terminal to be connected, based on the electric field intensity levels (RSSI levels) and the number of relay stages of the repeaters (S204-2, S204-4, S205-5), and completes the process for determining the terminal to be connected (S204). Upon the repeater to be connected to the meter interface 150 being determined (decided), the meter interface 150 terminates the search mode (S205).

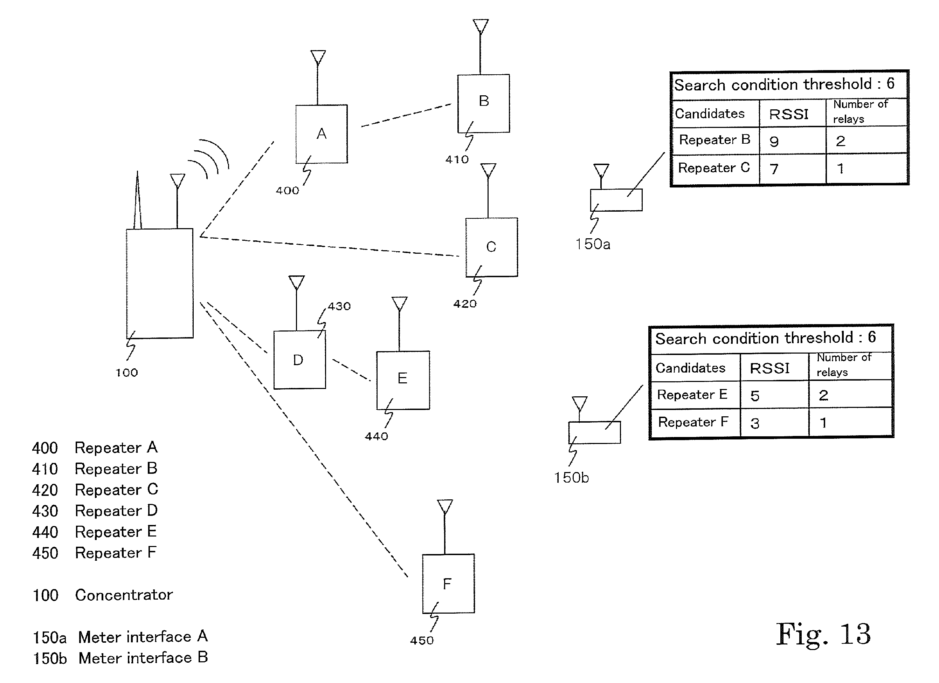

Subsequently, a description will be given of a case where the meter interface A (150a) searches a repeater to be connected to the meter interface A, and a case where the meter interface B (150b) searches a repeater to **be** connected to the meter interface B, with reference to Fig. 13.

The meter interface A (150a) shifts to a search mode to search a repeater to be connected to the meter interface A. Then, the meter interface A (150a) receives the reference signals continuously, i.e., the two signals from the repeater B (410) and the repeater C (420). In this case, the meter interface A (150a) obtains installation information from each of the repeater B and the repeater C. The repeater B (410) is connected to the concentrator 100 via the repeater A (400) as an upper terminal, and therefore, the installation information from the repeater B contains "2" as the number of relay stages. Also, the repeater C (420) is directly connected to the concentrator 100, and therefore, the installation information from the repeater C contains "1" as the number of relay stages. The search condition threshold of the meter interface A (150a) is "6," and therefore, the RSSI level corresponding to the repeater B (410) and the RSSI level corresponding to the repeater C (420) are higher than the search condition threshold. Therefore, the meter interface A (150a) executes control so that the repeater C (420) which is smaller in the number of relay stages, is selected as a connected target (S204-4 in Fig. 12(b)).

In the same manner, in the search mode, the meter interface B (150b) receives a signal from the repeater E (440) and a signal from the repeater F (450), by searching a repeater to be connected to the meter interface B (by receiving the reference signals continuously). The RSSI level of the repeater E (440) is "5," and the RSSI level of the repeater F (450) is "3." Thus, the RSSI levels of the respective repeaters are lower than the connection condition threshold "6" of the meter interface B. If the meter interface B obtains only an RSSI level which is lower than the search condition threshold, then, the meter interface B selects a terminal having a highest RSSI level, regardless of the installation information of the repeater (e.g., the number of relay stages) (see S204-5 in Fig. 12(b)). Therefore, in this case, the meter interface B selects the repeater E (440).

Although a description has been given of an example of route search between the meter interface and the repeater in the above example, search of a route between a repeater and a repeater among repeaters provided in plural stages, or search of a route by which a meter interface is connected to a concentrator may be conducted by a similar method.

The communication route between the terminals determined (decided) as described above, by searching it using the condition that the electric field intensity level is not lower than the search condition threshold, can achieve a high communication success rate. In this case, re-transmission control of communication and antenna diversity control can be omitted. This can achieve communication robustness and reduction of electric power consumption. On the other hand, regarding the terminal determined (decided) as a communication route using the condition that the electric field intensity level is lower than the search condition threshold, its communication success rate can be enhanced, and a communication area can be enhanced, by using any of the time diversity, the antenna diversity, or the route diversity.

In addition, efficient arrangement of the terminals such as the repeaters and the concentrators is achieved. This can reduce an introduction cost of the system or maintenance work of the system.

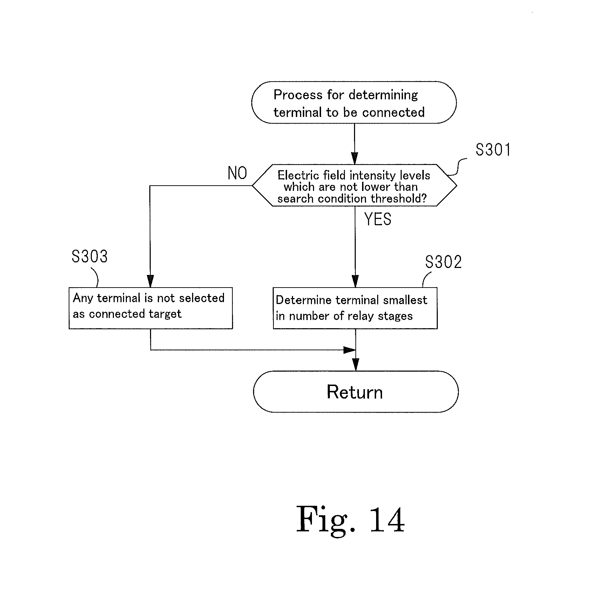

Although a method similar to that described above may be applied to the case where a repeater determines (decides) a connected target, from plural upper repeaters, such a configuration is merely exemplary. For example, in a case where a particular repeater determines (decides) a connected target from another plural repeaters, the repeater may be selected only from repeaters having electric field intensity levels which are not lower than the search condition threshold. A process for determining a terminal to be connected which occurs in this case is shown in a flowchart of Fig. 14.

As shown in Fig. 14, the repeater connected target determiner unit 458 in the repeater 400 determines whether or not there exists an electric field intensity level which is not lower than a search condition threshold, among electric field intensity levels obtained (S301). If it is determined that there exists such electric field intensity levels (S301: YES), the repeater connected target determiner unit 458 determines as a connected terminal a repeater which is smallest in the number of relay stages, from among repeaters having such electric field intensity levels (S302). On the other hand, if it is determined that there exist only electric field intensity levels which are lower than the search condition threshold (S301: NO), the repeater connected target determiner unit 458 does not select any terminal (repeater) as the connected target (S303) and terminates the process for determining the terminal to be connected.

It is desirable to construct a radio communication system using the repeaters which perform the above stated process for determining (deciding) the terminal to be connected, and the meter interfaces which perform the above stated process for determining the terminal to be connected shown in Fig. 7(b) or Fig. 12(b). In this case, the meter interface can be expected to achieve communication robustness, electric power saving, and an enlarged communication area as described above. In contrast, the repeater is configured such that it is connected only to a terminal having an electric field intensity level which is not lower than the search condition threshold, thereby improving reliability of communication performed by the repeater.

### Industrial Applicability

As should be appreciated from the foregoing, a radio device of the present invention is capable of enlarging a communication area while ensuring communication robustness with respect to a radio device to be connected. In addition, the radio device of the present invention is capable of suppressing a consumed current amount of a terminal and a communication traffic amount, and of enlarging a communication area. This makes it possible to construct a system which can ensure high reliability of the system and economic efficiency.

### Reference Signs Lists

- 100: concentrator
- 101: long-distance radio unit
- 102: processing unit
- 103: short-distance radio unit
- 104: reference clock generator unit
- 105: level calculator unit
- 106: installation information memory unit
- 150: meter interface
- 150a: meter interface A
- 150b: meter interface B
- 150c: meter interface C
- 151: interface radio unit
- 152: interface unit
- 153: interface processing unit
- 154: reference clock generator unit
- 155: interface level calculator unit
- 156: demodulator unit
- 157: memory unit
- 158: connected target determiner unit
- 180: meter
- 181: counter unit
- 200: concentrator B
- 300: concentrator C
- 400: repeater
- 401: repeater radio unit
- 405: repeater level calculator unit
- 406: repeater demodulator unit
- 410: repeater B
- 420: repeater C
- 430: repeater D
- 440: repeater E
- 450: repeater F
- 453: repeater processing unit
- 454: reference clock generator unit
- 457: repeater memory unit
- 458: repeater connected target determiner unit

## Claims

1. A radio device for use as a lowermost terminal or a relay terminal in a radio communication system including the lowermost terminal, and plural relay terminals defined as upper terminals of the lowermost terminal, the plural relay terminals serving as relays between the lowermost terminal and an uppermost terminal;
the radio device comprising:
a receiver unit configured to receive a communication signal transmitted from the plurality of upper terminals;
a level calculator unit (155) configured to calculate received signal levels of a plurality of communication signals received in the receiver unit;
a memory unit (157) configured to store a predetermined threshold level; and
a connected target determiner unit (158) configured to determine an upper terminal to be connected from among the plurality of upper terminals;
wherein the connected target determiner unit (158) is configured to compare the received signal level calculated in the level calculator unit (155) to the threshold level stored in the memory unit (157); **characterized in that**:
when the received signal levels include received signal levels which are not lower than the threshold level, the connected target determiner unit (158) determines as a connected target, an upper terminal which is smallest in the number of relay stages in a range to a particular terminal, said upper terminal being selected from among upper terminals having transmitted communication signals having received signal levels which are not lower than the threshold level; and
when all of the received signal levels are lower than the threshold level, the connected target determiner unit (158) determines as a connected target, an upper terminal having transmitted a communication signal having a highest received signal level.

2. The radio device according to claim 1, wherein the radio device is a lowermost terminal constituting a meter interface (150) connected to a meter (180) which is configured to manage an energy consumption or a fluid flow.

## Patentansprüche

1. Funkvorrichtung zur Verwendung als ein unterstes Terminal oder ein Weiterleitungsterminal in einem Funkkommunikationssystem, das das unterste Terminal und viele Weiterleitungsterminals beinhaltet, die als obere Terminals der untersten Terminals definiert sind, wobei die vielen Weiterleitungsterminals als Weiterleiter bzw. Vermittler zwischen dem untersten Terminal und dem obersten Terminal dienen;
wobei die Funkvorrichtung aufweist:
eine Empfängereinheit, die konfiguriert ist, um ein Kommunikationssignal zu empfangen, das von der Vielzahl der oberen Terminals übertragen ist;
eine Niveauberechnungseinheit (155), die konfiguriert ist, um empfangene Signalniveaus von einer Vielzahl von Kommunikationssignalen zu berechnen, die in der Empfängereinheit empfangen sind;
eine Speichereinheit (157), die konfiguriert ist, um ein vorbestimmtes Schwellenniveau zu speichern; und
eine Bestimmungseinheit (158) für ein verbundenes Ziel bzw. angeschlossenes Ziel, die konfiguriert ist, um ein oberes Terminal zu bestimmen, verbunden bzw. angeschlossen zu sein, und zwar unter der Vielzahl der oberen Terminals;
wobei die Bestimmungseinheit (158) für ein verbundenes Ziel bzw. angeschlossenes Ziel konfiguriert ist, um das empfangene Signalniveau, das in der Niveauberechnungseinheit (155) berechnet ist, mit dem Schwellenniveau zu vergleichen, das in der Speichereinheit (157) gespeichert ist; **dadurch gekennzeichnet, dass**:
wenn die empfangenen Signalniveaus empfangene Signalniveaus beinhalten, welche nicht kleiner sind als das Schwellenniveau, bestimmt die Bestimmungseinheit (158) für ein verbundenes Ziel bzw. angeschlossenes Ziel ein oberes Terminal welches das kleinste in der Nummer bzw. Anzahl von Weiterleitungsstufen ist, und zwar in einem Bereich von bzw. zu einem bestimmten Terminal, und zwar als ein verbundenes Ziel bzw. angeschlossenes Ziel, wobei das obere Terminal von bzw. aus oberen Terminals ausgewählt ist, die übertragene Kommunikationssignale aufweisen, die empfangene Signalniveaus aufweisen, welche nicht kleiner als das Schwellenniveau sind; und
wenn alle empfangenen Signalniveaus kleiner als das Schwellenniveau sind, bestimmt die Bestimmungseinheit (158) für ein verbundenes Ziel bzw. angeschlossenes Ziel, ein oberes Terminal, das ein Kommunikationssignal übertragen hat, das ein höchstes empfangenes Signalniveau aufweist, und zwar als das verbundene Ziel bzw. angeschlossene Ziel.

2. Funkvorrichtung nach Anspruch 1, wobei die Funkvorrichtung ein unterstes Terminal ist, das eine Messgeräteschnittstelle (150) bildet, die an ein Messgerät (180) angeschlossen ist, welches konfiguriert ist, um einen Energieverbrauch oder einen Fluidfluss zu handhaben.

## Revendications

1. Dispositif radio destiné à être utilisé en tant que terminal inférieur ou terminal relais dans un système de radiocommunication comprenant le terminal inférieur et une pluralité de terminaux relais définis comme terminaux supérieurs au terminal inférieur, la pluralité de terminaux relais servant de relais entre le terminal inférieur et un terminal supérieur ;
le dispositif radio comportant:
un récepteur configuré pour recevoir un signal de communication transmis par la pluralité de terminaux relais ;
une unité de calcul de niveau (155) configurée pour calculer des niveaux de signal reçu d'une pluralité de signaux de communication reçus dans l'unité de réception ;
une unité mémoire (157) configurée pour stocker un niveau seuil prédéterminé ; et
une unité de détermination de cible connectée (158) configurée pour définir un terminal supérieur à connecter parmi la pluralité de terminaux supérieurs ;
où l'unité de détermination de cible connectée (158) est configurée pour comparer le niveau de signal reçu calculé dans l'unité de calcul de niveau (155) au niveau seuil stocké dans l'unité mémoire (157) ; **caractérisé en ce que**
lorsque les niveaux de signal reçu comprennent des niveaux de signal reçu qui ne sont pas inférieurs au niveau seuil, l'unité de détermination de cible connectée (158) définit comme cible connectée un terminal supérieur, premier parmi un nombre de relais dans un ordre croissant dans le sens d'un terminal spécifique, ledit terminal supérieur étant sélectionné parmi des terminaux supérieurs ayant transmis des signaux de communication ayant des niveaux de signal reçu qui ne sont pas inférieurs au niveau seuil ; et
lorsque tous les niveaux de signal reçu sont inférieurs au niveau seuil, l'unité de détermination de cible connectée (158) définit comme cible connectée un terminal supérieur ayant transmis un signal de communication ayant le plus haut niveau de signal reçu.

2. Dispositif radio selon la revendication 1, où le dispositif radio est un terminal inférieur formant une interface de compteur (150) connectée à un compteur (180) configuré pour gérer une consommation d'énergie ou la circulation d'un fluide.
